# EUROPEAN PATENT SPECIFICATION

(11) **EP 3 459 800 B1**
(45) Date of publication and mention of the grant of the patent: **10.11.2021**
(21) Application number: 18196272.1
(22) Date of filing: 24.09.2018
(51) Int. Cl.: B60T 8/40

(54) **ELECTRONIC BRAKE SYSTEM AND METHODS OF OPERATING THE SAME**
ELEKTROBREMSSYSTEM UND VERFAHREN ZUM BETRIEB DAVON
SYSTÈME DE FREIN ÉLECTRONIQUE ET SES PROCÉDÉS DE FONCTIONNEMENT

(30) Priority: 25.09.2017 KR 20170123547; 31.01.2018 KR 20180012189
(43) Date of publication of application: 27.03.2019
(73) Proprietor: Mando Corporation, Gyeonggi-do 451-821 (KR)
(72) Inventor: JEONG, HYOJIN, 16709 Suwon-si, Gyeonggi-do (KR); CHOI, Seong-Ho, 14045 Dongan-gu, Anyang-si, Gyeonggi-do (KR)
(74) Representative: Pfenning, Meinig & Partner mbB

(56) References cited:
- US-A1- 2012 169 112
- US-A1- 2017 144 643

## Description

### BACKGROUND

### 1. Field

The present invention relates to an electronic brake system and a method of operating the same, and more specifically, to an electronic brake system for generating a braking force using an electrical signal corresponding to a displacement of a brake pedal and a method of operating the same.

### 2. Description of the Related Art

Vehicles require a brake system for performing braking, and various types of brake systems have been proposed for the safety of the driver and the passenger.

The conventional brake system is implemented in a way that when a driver applies a brake pedal, a booster mechanically connected thereto supplies a wheel cylinder with a fluid pressure required for braking. However, as, the market demands for implementing various braking functions increase sophisticatedly coping with the operating environments of a vehicle , there has been increasing use of an electronic brake system that includes a fluid pressure supply device that receives a driver's braking intention from a pedal displacement sensor for sensing a displacement of a brake pedal in response to a driver's application of a brake pedal as an electrical signal and supplies a wheel cylinder with a fluid pressure required for braking.

The electronic brake system, in a normal operation mode, is implemented such that a brake pedal operation of the driver is generated and provided as an electrical signal, and a fluid pressure supply device is electrically operated and controlled based on the electrical signal to form a fluid pressure required for braking and transmit the fluid pressure to a wheel cylinder. As described above, the electronic brake system, electrically operated and controlled, may realize complicated and various braking operations, but when a technical malfunction occurs in electric components, a fluid pressure required for braking is not stably formed, and thus the safety of the passenger may be threatened.

Accordingly, the electronic braking system enters an abnormal operation mode when a component fails or is out of control, and in this case, there is a need for a mechanism in which the operation of the driver's brake pedal is directly connected to the wheel cylinder. That is, in the abnormal operation mode of the electronic brake system, when the driver applies a pedal force to the brake pedal, a fluid pressure required for braking needs to be immediately formed and directly transmitted to the wheel cylinder.

### RELATED ART DOCUMENT

### PATENT DOCUMENT

EP 2 520 473 A1 (Honda Motor Co., Ltd.) 2012. 11. 7

Documents US 2017/0144643 A1 and US 2012/169112 A1 relate both to electric brake systems.

### SUMMARY

Therefore, it is an object of the present invention to provide an electronic brake system and a method of operating the same, capable of improving the productivity of products by simplifying the structure and reducing the number of valves.

It is another object to provide an electronic brake system and a method of operating the same, capable of effectively implementing braking in various operation conditions of the vehicle.

It is another object to provide an electronic brake system and a method of operating the same, capable of having improved performance and operation reliability.

It is another object to provide an electronic brake system and a method of operating the same, capable of stably providing a braking pressure of the vehicle.

It is another object to provide an electronic brake system and a method of operating the same, capable of improving durability of the product.

It is another object to provide an electronic brake system and a method of operating the same, capable of enabling a compact size of the product.

These objects are solved by the brake system of claim 1. Additional aspects of the invention will be set forth in part in the dependent claims, in part in the description which follows and, in part, will be obvious from the description, or may be learned by practice of the invention.

Therefore, it is an aspect of the present invention to provide an electronic brake system including: a reservoir in which a fluid is stored; a master cylinder including a master chamber and a master piston configured to have a position thereof changed according to an operation of a brake pedal and pressurize and discharge a fluid accommodated in the master chamber according to the changed position of the master piston; a simulation device including a simulation chamber and a simulation piston configured to have a position thereof changed according to the pressurized fluid discharged from the master chamber and pressurize and discharge a fluid accommodated in the simulation chamber according to the changed position of the simulation piston; a reservoir passage configured to communicate the master chamber, the simulation chamber, and the reservoir with each other; a simulator check valve provided on the reservoir passage and configured to allow only a flow of a fluid directed from the reservoir to the master chamber and the simulation chamber; and a simulator valve provided on a bypass passage connected in parallel to the simulator check valve on the reservoir passage and configured to control flow of a fluid in opposite directions.

The master piston may include a first master piston directly pressed by the brake pedal and a second master piston indirectly pressed by the first master piston, the master chamber may include a first master chamber in which the first master piston is accommodated and a second master chamber in which the second master piston is accommodated, the simulation piston may be provided to have a position thereof changed by the pressurized fluid pressurized and discharged from the first master chamber, and the reservoir passage may be provided to communicate the first master chamber, the simulation chamber, and the reservoir with each other.

The simulation device may further include a reaction force spring to elastically support the simulation piston.

The electronic brake system may further include: a hydraulic control unit provided between the master cylinder and a wheel cylinder to control a flow of a fluid pressure transmitted to the wheel cylinder; and a fluid pressure supply device configured to provide the hydraulic control unit with a fluid pressure according to an electrical signal output corresponding to a changed position of the brake pedal.

The hydraulic control unit may include a first hydraulic circuit configured to control a fluid pressure transmitted to two wheel cylinders and a second hydraulic circuit configured to control a fluid pressure transmitted to other two wheel cylinders.

The electronic brake system may further include: a first hydraulic passage connecting the fluid pressure supply device to the first hydraulic circuit; a second hydraulic passage connecting the fluid pressure supply device to the second hydraulic circuit; a first backup passage connecting the first master chamber to the first hydraulic circuit; and a second backup passage connecting the second master chamber to the second hydraulic circuit.

The electronic brake system may further include: a first cut-valve provided on the first backup passage and configured to control a flow of a pressurized fluid; and a second cut-valve provided on the second backup passage and configured to control a flow of a pressurized fluid.

It is another aspect of the present invention to provide a method of operating the electronic brake system as claimed in claim 2, the method including, in a normal operation mode: opening the simulator valve; and allowing the simulation piston to be changed in position by a pressurized fluid discharged from the first master chamber, and supplying a pressurized fluid accommodated in the simulation chamber to the reservoir along the reservoir passage.

It is another aspect of the present invention to provide a method of operating the electronic brake system as claimed in claim 7, the method including, in a test mode of checking a leak of the master cylinder or the simulation device: closing the simulator valve and the second cut-valve, and opening the first cut valve; providing the first master chamber with a fluid pressure generated by an operation of the fluid pressure supply device; and comparing a fluid pressure value of a pressurized fluid predicted to be generated on the basis of an amount of the operation of the fluid pressure supply and a fluid pressure value of a pressurized fluid supplied to the first master chamber.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a hydraulic circuit diagram illustrating an electronic brake system according to the present embodiment.
FIG. 2 is an enlarged view illustrating main parts of the present disclosure.
FIG. 3 is a hydraulic circuit diagram illustrating an operation state of the electronic brake system according to the present embodiment in a test mode.

### DETAILED DESCRIPTION

Hereinafter, embodiments of the present invention will be described in detail with reference to the accompanying drawings. The present invention is not limited to the embodiments shown herein but may be embodied in other forms without departing from the scope of protection offered by the appended claims. In order to make the description of the present invention clear, unrelated parts are not shown and, the sizes of components are exaggerated for clarity

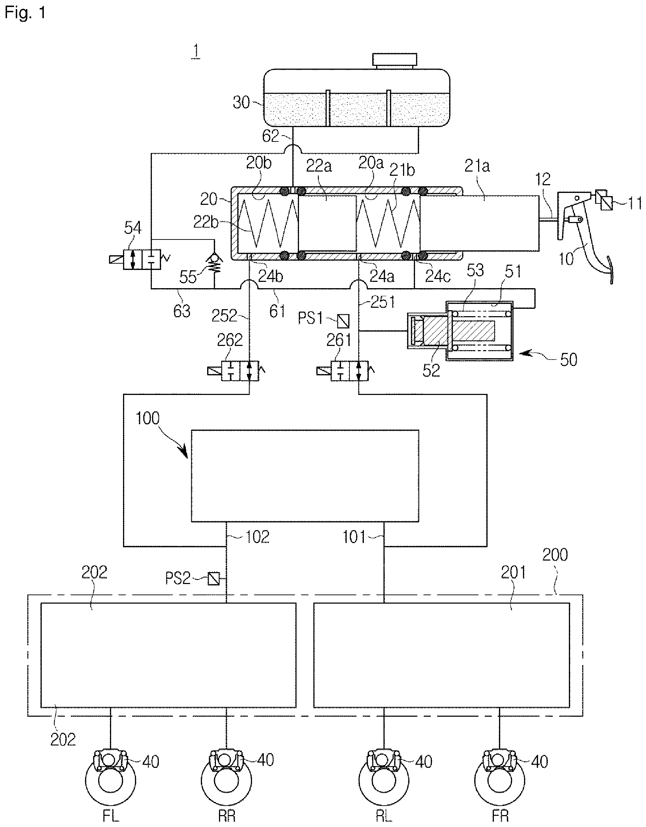

FIG. 1 is a hydraulic circuit diagram illustrating an electronic brake system according to the present embodiment.

Referring to FIG. 1, the electronic brake system 1 according to the present embodiment includes a reservoir 30 for storing a medium, such as a brake oil, a master cylinder 20 for pressurizing and discharging a medium accommodated therein using a pedal force of the brake pedal 10, a simulation device 50 for providing the driver with a reaction force against the pedal force of the brake pedal 10, a wheel cylinder 40 for performing braking on each vehicle wheel RR, RL, FR, and FL by receiving a fluid pressure of a pressurized medium, a fluid pressure supply device 100 for receiving a driver's braking intention corresponding to a displacement of the brake pedal 10 as an electrical signal and generating a fluid pressure of a pressurized medium through a mechanical operation, a hydraulic control unit 200 for controlling the flow of a fluid pressure transmitted to the wheel cylinder 40, an electronic control unit (ECU, not shown) for controlling the operations of the fluid pressure supply device 100 and various valves on the basis of fluid pressure information and brake pedal displacement information, and a plurality of passages provided to connect the elements to deliver a pressurized medium.

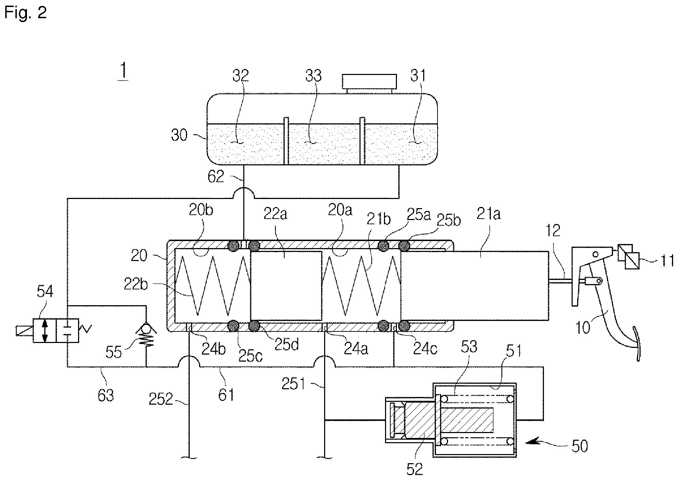

The master cylinder 20 includes at least one chamber to pressurize and discharge a medium accommodated therein. FIG. 2 is an enlarged view illustrating main parts of the present disclosure, such as the master cylinder 20, the reservoir 30, the simulation device 50, and the like. Referring to FIGS. 1 and 2, the master cylinder 20 includes a first master chamber 20a and a second master chamber 20b and a first master piston 21a and a second master piston 22a provided in the first master chamber 20a and the second master chamber 20b, respectively.

The first master chamber 20a is provided with the first master piston 21a connected to an input rod 12, and the second master chamber 20b is provided with the second master piston 22a. In addition, the first master chamber 20a may receive or discharge a pressurized medium through a first hydraulic port 24a, and the second master chamber 20b may receive or discharge a pressurized medium through a second hydraulic port 24b. For example, the first hydraulic port 24a may be connected to a first backup passage 251, which will be described later, and the second hydraulic port 24b may be connected to a second backup passage 252, which will be described later. Meanwhile, the first master chamber 20a may be provided with a third hydraulic port 24c connected to a first reservoir passage 61 which will be described later.

Meanwhile, the master cylinder 20 according to the present embodiment is provided with the two master chambers 20a and 20b independent from each other, thereby ensuring safety in the event of failure of the components. For example, one master chamber 20a of the two master chambers 20a and 20b may be connected to the right rear wheel RR and the left rear wheel RL of the vehicle and the other master chamber 20b of the two master chambers 20a and 20b may be connected to the left front wheel FL and the right front wheel FR so that braking of the vehicle may be performed even when one of the master chambers fails.

For example, one of the two master chambers may be connected to the left front wheel FL and the left rear wheel RL, and the other master chamber may be connected to the right rear wheel RR and the right front wheel FR. That is, the position of the wheel connected to the master chamber of the master cylinder 20 is not limited thereto, and may be variously implemented.

A first spring 21b is provided between the first master piston 21a and the second master piston 22a of the master cylinder 20, and a second spring 22b is provided between the second master piston 22a and an end of the master cylinder 20. That is, the first master piston 21a may be accommodated in the first master chamber 20a, and the second master piston 22a may be accommodated in the second master chamber 20b.

The first master piston 21a and the second master piston 22a are moved as the displacements of the first spring 21b and the second spring 22b are changed by the brake pedal 10 being operated by the driver, to thereby compress the first spring 21b and the second spring 22b. When the pedal force of the brake pedal 10 is released, the first spring 21b and the second spring 22b are extended by the elastic forces thereof, so that the first and second master pistons 21a and 22a may return to the original positions.

Meanwhile, the brake pedal 10 may be connected to the first master piston 21a of the master cylinder 20 by the input rod 12. The input rod 12 may be directly connected to the first master piston 21a or may be provided to come into close contact with the first master piston 21a such that when the driver applies the brake pedal 10, the master cylinder 20 is directly pressed without a pedal dead stroke section.

The first master chamber 20a is connected to the reservoir 30 together with a simulation chamber 51 of the simulation device 50, which will be described later, through the first reservoir passage 61, and the second master chamber 20b may be connected to the reservoir 30 through the second reservoir passage 62. The first reservoir passage 61 is connected to communicate a rear end of the simulation chamber 51 of the simulation device 50 and the first master chamber 20a with the reservoir 30. The first reservoir passage 61 is provided with a bypass passage 63, a simulator valve 54, and a check valve 55, which will be described later, and details thereof will be described later.

The master cylinder 20 may include two sealing members 25a and 25b disposed on front and rear sides of the first reservoir passage 61 connected to the first master chamber 20a and two sealing members 25c and 25d disposed on front and rear sides of the second reservoir passage 62. The sealing members 25a, 25b, 25c and 25d may be provided in a ring-shaped structure protruding from an inner wall of the master cylinder 20 or outer circumferential surfaces of the pistons 21a and 22a.

The simulation device 50 is connected to the first backup passage 251, which will be described later, to receive a fluid pressure discharged from the first master chamber 20a and provide the driver with a reaction force against the pedal force of the brake pedal 10. As the simulation device 50 provides the driver with a reaction force against the pedal force of the brake pedal 10, the driver is provided with a pedal feel, so that sophisticated operation of the brake pedal 10 is performed and the braking force of the vehicle is also sophisticatedly adjusted.

Referring to FIGS. 1 and 2, the simulation device 50 includes a simulation piston 52 configured to have a position thereof changed by a pressurized medium discharged from the first hydraulic port 24a of the master cylinder 20, the simulation chamber 51 configured to pressurize and discharge a medium accommodated therein according to the changed position of the simulation piston 51, a pedal simulator provided with a reaction force spring 53 for elastically supporting the simulation piston 52, and the simulator valve 54 provided at a downstream side of the simulation chamber 51 on the first reservoir passage 61.

The simulation piston 52 and the reaction force spring 53 are provided to have a predetermined range of displacement within the simulation chamber 51 by the pressurized medium introduced from the first master chamber 20a into the simulation chamber 51 through the first backup passage 251, which will be described later. The simulator valve 54 is connected in parallel to the check valve 55 on the first reservoir passage 61 connecting the rear end of the simulation chamber 51 to the reservoir 30. Even when the simulation piston 52 is returned to the original position by the check valve 55, the medium introduced from the reservoir 30 allows the inside of the simulation chamber 51 to be always filled with the medium.

Meanwhile, the reaction force spring 53 shown in the drawing is merely an example that may provide the simulation piston 52 with an elastic force, and may be provided in various structures as long as it can store an elastic force. For example, the reaction force spring 53 may be formed of rubber, or various members having a coil or plate shape capable of storing an elastic force.

The check valve 55 allows the flow of the medium flowing from the reservoir 30 to the first master chamber 20a and the simulation chamber 51 while blocking the flow of the pressurized medium from the first master chamber 20a and the simulation chamber 51 to the reservoir 30. In other words, the check valve 55 is provided to allow only the flow of the medium from the reservoir 30 to the first master chamber 20a and the simulation chamber 51.

The first reservoir passage 61 is provided with the bypass passage 63 connected in parallel to the check valve 55. The bypass passage 63 is provided with the simulator valve 54 that controls the flows of the medium in opposite directions. In detail, the bypass passage 63 is connected to the front and rear sides of the check valve 55 while bypassing the front and rear sides of the check valve 55 on the first reservoir passage 61. The simulator valve 54 may be provided as a normally closed type solenoid valve that is closed normally, and upon receiving an electrical signal from the electronic control unit, which will be described later, operates to be opened.

The simulator valve 54 is opened when the driver applies a pedal force to the brake pedal 10 in a normal operating mode, such that a pressurized medium accommodated in the rear side of the simulation piston 52 of the simulation chamber 51 (the right side of the simulation piston in the drawing) is transferred to the reservoir 30 through the first reservoir passage 61, and thus the pressurized medium in the first master chamber 20a is transferred to the front side of the simulation piston 52 of the simulation chamber 51 (the left side of the simulation piston in the drawing) so that the reaction spring 53 is compressed to provide the driver with a pedal feel.

On the other hand, when the first master piston 21a is moved forward by the driver's operation of the brake pedal 10, the third hydraulic port 24c is blocked by the first master piston 21a and the two sealing members 25a and 25b, and thus the pressurized medium accommodated in the rear side of the simulation piston 52 is prevented from being reintroduced into the first master chamber 20a through the first reservoir passage 61.

Describing the operation of the simulation device 50, when the driver operates the brake pedal 10, the simulator valve 54 is opened and the first master piston 21a moves and the pressurized medium in the first master chamber 20a is supplied to the front side of the simulation piston 52 in the simulation chamber 51 to cause a displacement of the simulation piston 52. At this time, the pressurized medium which has been filled in the rear side of the simulation piston 52 in the simulation chamber 51 moves along the first reservoir passage 61 that is opened by the opening of the simulator valve 54 and thus is transferred to the reservoir 30, and as the simulation piston 52 compresses the reaction force spring 53, the reaction force against the compressed reaction force spring 53 is provided to the driver as a pedal feel.

Then, when the driver releases his/her pedal force on the brake pedal 10, the reaction force spring 53 is extended by the elastic force and thus the simulation piston 52 returns to the original position, and the pressurized medium filled in the front side of the simulation piston 52 in the simulation chamber 51 is discharged to the first master chamber 20a or the first backup passage 251, and the rear side of the simulation piston 52 in the simulation chamber 51 is supplied with the medium transmitted from the reservoir 30 through the first reservoir passage 61, so that the inside of the simulation chamber 51 is filled with the medium again.

As such, since the inside of the simulation chamber 51 is always filled with the medium, the friction of the simulation piston 52 is minimized during the operation of the simulation device 50, so that the durability of the simulation device 50 is improved, and the inflow of foreign substance is blocked.

Meanwhile, the simulator valve 54 may serve as a test valve that operates in the test mode of the electronic brake system 1 according to the present embodiment. Details thereof will be described later.

The reservoir 30 is provided to accommodate a medium, such as brake oil, therein, and may be divided into three reservoir chambers 31, 32, and 33. Adjacent reservoir chambers 31, 32, and 33 may be separated by partitions. For example, the first reservoir chamber 31 and the third reservoir chamber 33 may be divided by a first partition, and the third reservoir chamber 33 and the second reservoir chamber 32 may be divided by a second partition.

Each of the first partition and the second partition is partly opened such that the first, second, and third reservoir chambers 31, 32, and 33 may communicate with each other. Accordingly, the internal pressures of the first to third reservoir chambers 31, 32, and 33 may be equal to each other. In one example, the internal pressures of the first to third reservoir chambers 31, 32, and 33 may be provided at a pressure level corresponding to the atmospheric pressure.

The first reservoir chamber 31 may be connected to the first master chamber 20a of the master cylinder 20 and the simulation device 50 by the first reservoir passage 61. In addition, the first reservoir chamber 31 may be connected to any two of the wheel cylinders 40.

As described above, the connection between the first reservoir chamber 31 and the first master chamber 20a and the connection between the first reservoir chamber 31 and the simulation device 50 is controlled by the simulator valve 54 and the simulator check valve 55. In addition, the connection between the first reservoir chamber 31 and any two of the wheel cylinders 40 may be controlled by an outlet valve (not shown) provided in the hydraulic control unit 200.

The second reservoir chamber 32 may be connected to the second master chamber 20b of the master cylinder 20 by the second reservoir passage 62. In addition, the second reservoir chamber 32 may be connected to the remaining two of the wheel cylinders 40. The connection between the second reservoir chamber 32 and the remaining two wheel cylinders 40 may be controlled by the outlet valve (not shown) provided in the hydraulic control unit 200.

Although not shown, the third reservoir chamber 33 may be connected to the fluid pressure supply device 100 by a passage.

As such, the reservoir 30 is divided into the third reservoir chamber 33 connected to the fluid pressure supply device 100 and the first and second reservoir chambers 31 and 32 connected to the first and second master chambers 20a and 20b, respectively. When a reservoir chamber for supplying a pressurized medium to the fluid pressure supply device 100 is provided as the same as a reservoir chamber for supplying a pressurized medium to the master chambers 20a and 20b, and the reservoir 30 has a difficulty in supplying a pressurized medium to the fluid pressure supply device 100, the master chambers 20a and 20b are also not stably supplied with a pressurized medium. Accordingly, the reservoir 30 is divided into the third reservoir chamber 33 and the first and second reservoir chamber 31 and 32such that even in an emergency situation in which a pressurized medium is not stably supplied to the fluid pressure supply device 100, the reservoir 30 may stably supply a pressurized medium to the first and second master chambers 20a and 20b to thereby perform an emergency braking.

In addition, since the reservoir 30 is divided into the first reservoir chamber 31 and the second reservoir chamber 32, even in an emergency situation in which a pressurizing medium is not stably supplied to the first master chamber 20a, the reservoir 30 may stably supply a pressurized medium to the second master chamber 20b to form the braking pressure on two of the four wheel cylinders 40.

The fluid pressure supply device 100 is provided to supply a fluid pressure of a pressurized medium delivered to the wheel cylinder 40. The fluid pressure supply device 100 may be provided in various types and structures. As an example, a piston (not shown) driven by a driving force of a motor (not shown) may push a pressurized medium in the chamber such that a fluid pressure is transmitted to the wheel cylinder 40. Alternatively, the fluid pressure supply device 100 may be provided as a motor-driven pump or a high-pressure accumulator.

In detail, when the driver applies a pedal force to the brake pedal 10, an electrical signal is transmitted from a pedal displacement sensor 11 according to a change in displacement of the brake pedal 10, and the motor is operated by the signal. A power converting unit for converting a rotational motion of the motor into a linear motion may be provided between the motor and the piston. The power converting unit may include a worm, a worm gear, and/or a rack and pinion gear.

The hydraulic control unit 200 includes a first hydraulic circuit 201 configured to receive a fluid pressure and control a fluid pressure transmitted to two wheel cylinders and a second hydraulic circuit 202 configured to control a fluid pressure transmitted to the remaining two wheel cylinders. For example, the first hydraulic circuit 201 may control the right front wheel FR and the left rear wheel RL while the second hydraulic circuit 202 may control the left front wheel FL and the right rear wheel RR. However, the positions of the wheels connected to the first hydraulic circuit 201 and the second hydraulic circuit 202 may be not limited thereto, and variously implemented.

The hydraulic control unit 200 may include an inlet valve (not shown) provided at a front end of each wheel cylinder 40 to control the fluid pressure and an outlet valve (not shown) diverging from between the inlet valve and the wheel cylinder 40 and connected to the reservoir 30. In addition, the fluid pressure supply device 100 may be connected to a front end of the inlet valve of the first hydraulic circuit 201 by the first hydraulic passage 101, and the fluid pressure supply device 100 may be connected to a front end of the inlet valve of the second hydraulic circuit 202 by the second hydraulic passage 102, and fluid pressures of pressurized media generated and provided from the fluid pressure supply device 100 through the first hydraulic passage 101 and the second hydraulic passage 102 may be transmitted to the first hydraulic circuit 201 and the second hydraulic circuit 202, respectively.

The electronic brake system 1 according to the present embodiment may include the first backup passage 251 and the second backup passage 252 that implement braking of the wheel cylinder 40 by directly supplying the hydraulic circuits 201 and 201 with pressurized media discharged from the master cylinder 20 when a normal operation is not performed due to a device failure and the like. A mode in which the fluid pressure of the master cylinder 20 is directly transmitted to the wheel cylinder 40 is referred to as a fallback mode.

The first backup passage 251 is provided to connect the first hydraulic port 24a of the master cylinder 20 to the first hydraulic circuit 201, and the second backup passage 252 is provided to connect the second hydraulic port 24b of the master cylinder 20 to the second hydraulic circuit 202. The first backup passage 251 is provided with the first cut valve 261 for controlling the flow of the pressurized medium, and the second backup passage 252 is provided with the second cut valve 262 for controlling the flow of the pressurized medium. The first and second cut valves 261 and 262 each may be provided with a normally open type solenoid valve that is normally opened and is operated to be closed upon receiving a close signal from the electronic control unit.

Accordingly, when the first and second cut valves 261 and 262 are closed in a general braking situation, a fluid pressure provided from the hydraulic pressure supply device 100 is transmitted to the wheel cylinder 40 through the first and second hydraulic circuits 201 and 202, and when the first and second cut valves 261 and 262 are opened in a state having a difficulty in normally performing braking due to a failure of the device or the like, a fluid pressure provided from the master cylinder 20 is directly supplied to the wheel cylinder 40 through the first and second backup passages 251 and 252.

Meanwhile, reference numeral PS1 denotes a back-up passage pressure sensor for measuring a fluid pressure of the master cylinder 20, and reference numeral PS2 denotes a hydraulic pressure passage sensor for sensing a fluid pressure of a hydraulic circuit.

Hereinafter, a test mode operation of the electronic brake system 1 according to the present embodiment will be described.

The brake system 1 according to the present embodiment may check the abnormality of the apparatus periodically or at any time by executing a test mode before driving, during stop, or during driving of the vehicle.

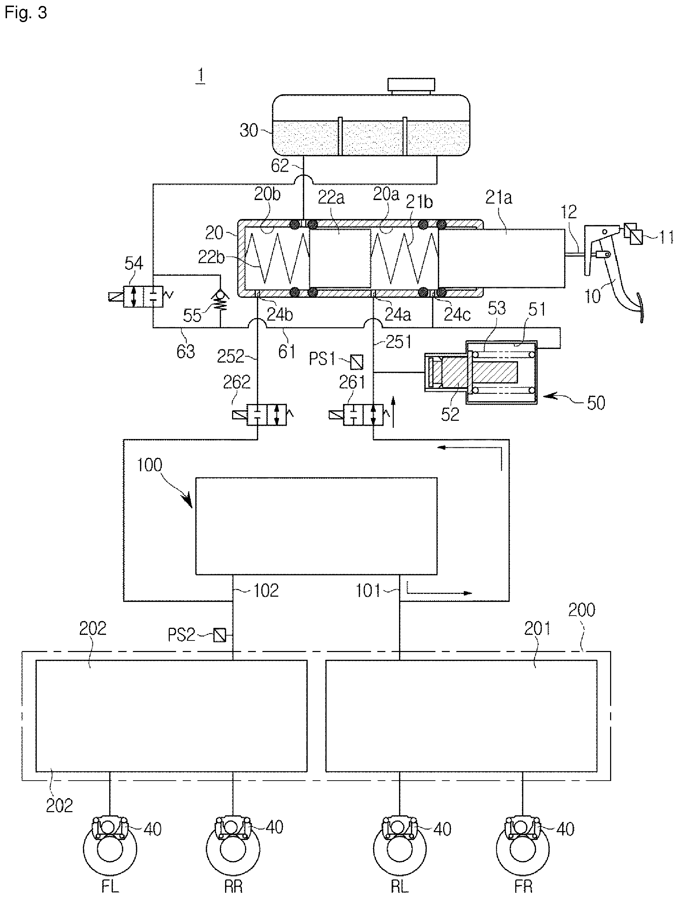

FIG. 3 is a hydraulic circuit diagram illustrating an operation state of the electronic brake system 1 according to the present embodiment in a test mode. In detail, the test mode is provided to check whether the master cylinder 20 or the simulator device 50 has a leak, or an air exists inside the master cylinder 20.

When the electronic brake system 1 operates abnormally, the valves are controlled to be in an initial state of braking, that is, a non-operating state, and the first and second cut valves 261 and 262 provided in the first and second backup passages 251 and 252 are opened such that the fluid pressure is transmitted to the wheel cylinder 40 immediately.

At this time, the simulator valve 54 is closed to prevent the fluid pressure, which is transmitted to the wheel cylinder 40 through the first backup channel 251, from leaking to the reservoir 30 through the simulation device 50. Accordingly, the fluid pressure discharged from the master cylinder 20 by the brake pedal 10 applied by the driver is transmitted to the wheel cylinder 40 without loss, ensuring stable braking.

However, when a leak exists in the master cylinder 20 or the simulator device 50, a part of the fluid pressure discharged from the master cylinder 20 may be lost. As a result, the braking force intended by the driver may not be generated, thus failing to ensure a stability of braking.

In addition, such a constraint may also occur when air exists in the master cylinder 20. When air exists in the master cylinder 20, the pedal feel sensed by the driver may be lightened, and when the driver, without recognizing such as abnormality, switches the operation mode into a fall back mode, the performance of braking may be lowered.

When a fluid pressure discharged from the fluid pressure supply device 100 is introduced into the reservoir 30 and a pressure loss occurs, it is difficult to determine whether there is a leak in the master cylinder 20 or the simulator device 50. Accordingly, in the test mode, the hydraulic circuit connected to the fluid pressure supply device 100 may be formed as a closed circuit by closing the simulator valve 54. In other words, the simulator valve 54 and the outlet valves of the first and second hydraulic circuits 201 and 202 are closed to block the passage connecting the fluid pressure supply device 100 and the reservoir 30, thereby forming a closed circuit.

When switching to the test mode, the electronic brake system 1 closes the simulator valve 54 while supplying a fluid pressure only to the first backup passage 251 between the first and second backup passages 251 and 252 to which the simulation device 50 is connected. Accordingly, the second cut valve 262 may be switched to a closed state to prevent a fluid pressure discharged from the fluid pressure supply device 100 from being transmitted to the master cylinder 20 along the second backup passage 252.

As the second cut valve 262 is controlled to be in a closed state, so that the fluid pressure of the fluid pressure supply device 100 is prevented from being discharged along the second backup passage 252, and as the simulator valve 54 is switched to be in a closed state, so that a fluid pressure transmitted from the fluid pressure supply device 100 to the master cylinder 20 is prevented from leaking to the reservoir 30 through the simulator device 50 and the first reservoir passage 61.

In the test mode, the electronic control unit may generate a fluid pressure through the fluid pressure supply device 100, analyze a pressure value of the master cylinder 20 measured by the back-up passage pressure sensor PS1 to determine whether a leak exists in the master cylinder 20 or the simulation device 50 and whether air exists in the master cylinder 20. By comparing a fluid pressure value of a pressurized medium predicted to be generated based on the operation rate of the fluid pressure supply device 100 with an actual inner pressure of the first master chamber 20a measured by the back-up passage pressure sensor PS1, the existence of leak or air in the master cylinder 20may be diagnosed, and a leak in the simulation device 50 may be diagnosed. In detail, a fluid pressure value calculated and predicted on the basis of the operation rate of the fluid pressure supply device 100 is compared with an actual fluid pressure value of the master cylinder 20 measured by the back-up passage pressure sensor PS1, and when the values coincide with each other, it is determined that the master cylinder 20 and the simulation device 50 have no leak and that the master cylinder 20 has no air. On the other hand, when the actual fluid pressure value of the master cylinder 20 measured by the back-up passage pressure sensor PS1 is lower than the fluid pressure value calculated and predicted on the basis of the operation rate of the fluid pressure supply device 100, it is determined that part of the fluid pressure of the pressurized medium provided to the first master chamber 20a is lost and thus the master cylinder 20 or the simulator valve 54 has a leak or the master cylinder 20 has an air, and the electronic control unit notifies the driver of the result.

As described above, the electronic brake system 1 according to the present embodiment includes the first reservoir passage 61 for communicating the master cylinder 20, the simulation device 50, and the reservoir 30, and the simulator valve 54, so that a simulator valve for controlling an operation of the pedal simulator and a test valve for controlling the flow of a fluid pressure during a test mode are integrated as the simulator valve 54, so that the structure is simplified and the productivity is be improved. Further, since the number of valves is reduced, the manufacturing cost of the product and the number of the assembling processes are reduced.

As is apparent from the above, the electronic brake system and the method of operating the same can reduce the size and weight of the product by reducing the number of valves with a simplified structure.

The electronic brake system and the method of operating the same can improve the performance and operation reliability of the product.

The electronic brake system and the method of operating the same can stably provide a braking pressure even in a malfunction of components or in a leak of a pressurized medium.

The electronic brake system and the method of operating the same can stably and effectively implement braking in various operation conditions of the vehicle.

The electronic brake system and the method of operating the same can improve the productivity while saving the manufacturing cost.

## Claims

1. An electronic brake system (1) comprising:
a reservoir (30) in which a fluid is stored;
a master cylinder (20) including a master chamber (20a, 20b) and a master piston (21a, 21b) configured to have a position thereof changed according to an operation of a brake pedal (10) and pressurize and discharge a fluid accommodated in the master chamber (20a, 20b) according to the changed position of the master piston (21a, 21b);
a simulation device including a simulation chamber (51) and a simulation piston (52) configured to have a position thereof changed according to the pressurized fluid discharged from the master chamber (20a) and pressurize and discharge a fluid accommodated in the simulation chamber (51) according to the changed position of the simulation piston (52);
a simulator check valve (55); and
a simulator valve (54);
**characterized by** a reservoir passage (61) configured to communicate the master chamber (20a), the simulation chamber (51), and the reservoir (30) with each other;
wherein the simulator valve (54) is provided on a bypass passage (63) connected in parallel to the simulator check valve (55) on the reservoir passage (61) and configured to control flow of a fluid in opposite directions,
wherein the simulator check valve (55) is provided on the reservoir passage (61) and configured to allow only a flow of a fluid directed from the reservoir (30) to the master chamber (20a) and the simulation chamber (51).

2. The electronic brake system (1) of claim 1, wherein the master piston includes a first master piston (21a) directly pressed by the brake pedal (10) and a second master piston (22a) indirectly pressed by the first master piston (21a),
the master chamber includes a first master chamber (20a) in which the first master piston (21a) is accommodated and a second master chamber (20b) in which the second master piston (22a) is accommodated,
the simulation piston (52) is provided to have a position thereof changed by the pressurized fluid pressurized and discharged from the first master chamber (20a), and
the reservoir passage (61) is provided to communicate the first master chamber (20a), the simulation chamber (51), and the reservoir (30) with each other.

3. The electronic brake system (1) of any of claims 1 or 2, wherein the simulation device (50) further includes a reaction force spring (53) to elastically support the simulation piston (52).

4. The electronic brake system (1) of any of claims 1 to 3, further comprising:
a hydraulic control unit (200) provided between the master cylinder (20) and a wheel cylinder (40) to control a flow of a fluid pressure transmitted to the wheel cylinder (40); and
a fluid pressure supply device (100) configured to provide the hydraulic control unit (200) with a fluid pressure according to an electrical signal output corresponding to a changed position of the brake pedal (10).

5. The electronic brake system (1) of claim 4, wherein the hydraulic control unit (200) includes a first hydraulic circuit (201) configured to control a fluid pressure transmitted to two wheel cylinders (40) and a second hydraulic circuit (202) configured to control a fluid pressure transmitted to other two wheel cylinders (40).

6. The electronic brake system (1) of claim 5, further comprising:
a first hydraulic passage (101) connecting the fluid pressure supply device (100) to the first hydraulic circuit (201);
a second hydraulic passage (102) connecting the fluid pressure supply device (100) to the second hydraulic circuit (202);
a first backup passage (251) connecting the first master chamber (20a) to the first hydraulic circuit (201); and
a second backup passage (252) connecting the second master chamber (20b) to the second hydraulic circuit (202).

7. The electronic brake system (1) of claim 6, further comprising:
a first cut-valve (261) provided on the first backup passage (251) and configured to control a flow of a pressurized fluid; and
a second cut-valve (262) provided on the second backup passage (252) and configured to control a flow of a pressurized fluid.

8. A method of operating the electronic brake system (1) as claimed in claim 2 or any of claims 3 to 7 insofar as they depend on claim 2, the method comprising, in a normal operation mode:
opening the simulator valve (54); and
allowing the simulation piston (52) to be changed in position by a pressurized fluid discharged from the first master chamber (20a), and supplying a pressurized fluid accommodated in the simulation chamber (51) to the reservoir (30) along the reservoir passage (61) configured to communicate the master chamber (20a), the simulation chamber (51), and the reservoir (30) with each other.

9. A method of operating the electronic brake system (1) as claimed in claim 7, the method comprising, in a test mode of checking a leak of the master cylinder (20) or the simulation device (50):
closing the simulator valve (54) and the second cut-valve (262), and opening the first cut valve (261);
providing the first master chamber (20a) with a fluid pressure generated by an operation of the fluid pressure supply device (100); and
comparing a fluid pressure value of a pressurized fluid predicted to be generated on the basis of an amount of the operation of the fluid pressure supply device (100) and a fluid pressure value of a pressurized fluid supplied to the first master chamber (20a).

## Patentansprüche

1. Elektronisches Bremssystem (1), umfassend:
einen Behälter (30), in dem ein Fluid gelagert ist;
einen Hauptzylinder (20), umfassend eine Hauptkammer (20a, 20b) und einen Hauptkolben (21a, 21b), dazu ausgelegt, seine Position entsprechend einer Betätigung eines Bremspedals (10) zu ändern und ein in der Hauptkammer (20a, 20b) untergebrachtes Fluid entsprechend der geänderten Position des Hauptkolbens (21a, 21b) mit Druck beaufschlagt und abzulassen;
eine Simulationsvorrichtung, umfassend eine Simulationskammer (51) und einen Simulationskolben (52), dazu ausgelegt, seine Position entsprechend dem aus der Hauptkammer (20a) abgelassenen druckbeaufschlagten Fluid zuändern und ein in der Simulationskammer (51) untergebrachtes Fluid entsprechend der geänderten Position des Simulationskolbens (52) mit Druck zu beaufschlagen und abzulassen;
ein Simulatorrückschlagventil (55); und
ein Simulatorventil (54);
**gekennzeichnet durch** einen Behälterdurchgang (61), der dazu ausgelegt ist, die Hauptkammer (20a), die Simulationskammer (51) und den Behälter (30) miteinander zu verbinden;
wobei das Simulatorventil (54) an einem Umgehungsdurchgang (63) bereitgestellt, mit dem Simulatorrückschlagventil (55) am Behälterdurchgang (61) parallel verbunden und dazu ausgelegt ist, Strom eines Fluids in entgegengesetzten Richtungen zu regeln,
wobei das Simulatorrückschlagventil (55) am Behälterdurchgang (61) bereitgestellt und dazu ausgelegt ist, nur einen vom Behälter (30) zur Hauptkammer (20a) und zur Simulationskammer (51) gerichteten Strom eines Fluids zu gestatten.

2. Elektronisches Bremssystem (1) nach Anspruch 1, wobei der Hauptkolben einen ersten Hauptkolben (21a), der direkt durch das Bremspedal (10) gedrückt wird, und einen zweiten Hauptkolben (22a), der indirekt durch den ersten Hauptkolben (21a) gedrückt wird, umfasst,
die Hauptkammer eine erste Hauptkammer (20a), in welcher der erste Hauptkolben (21a) untergebracht ist, und eine zweite Hauptkammer (20b), in welcher der zweite Hauptkolben (22a) untergebracht ist, umfasst,
der Simulationskolben (52) vorgesehen ist, seine Position durch das von der ersten Hauptkammer (20a) mit Druck beaufschlagte und abgelassene druckbeaufschlagte Fluid zu verändern, und
der Behälterdurchgang (61) vorgesehen ist, die erste Hauptkammer (20a), die Simulationskammer (51) und den Behälter (30) miteinander zu verbinden.

3. Elektronisches Bremssystem (1) nach einem der Ansprüche 1 oder 2, wobei die Simulationsvorrichtung (50) ferner eine Reaktionskraftfeder (53) umfasst, um den Simulationskolben (52) elastisch zu stützen.

4. Elektronisches Bremssystem (1) nach einem der Ansprüche 1 bis 3, ferner umfassend:
eine Hydraulikregeleinheit (200), die zwischen dem Hauptzylinder (20) und einem Radzylinder (40) vorgesehen ist, um einen Strom eines zu dem Radzylinder (40) übertragenen Fluiddrucks zu regeln; and
eine Fluiddruckzuführvorrichtung (100), dazu ausgelegt, der Hydraulikregeleinheit (200) einen Fluiddruck gemäß einem elektrischen Signal, ausgegeben entsprechend einer geänderten Position des Bremspedals (10), bereitzustellen.

5. Elektronisches Bremssystem (1) nach Anspruch 4, wobei die Hydraulikregeleinheit (200) einen ersten Hydraulikkreis (201), dazu ausgelegt, einen auf zwei Radzylinder (40) übertragenen Fluiddruck zu regeln, und einen zweiten Hydraulikkreis (202), dazu ausgelegt, einen zu den anderen zwei Radzylindern (40) übertragenen Fluiddruck zu regeln, umfasst.

6. Elektronisches Bremssystem (1) nach Anspruch 5, ferner umfassend:
einen ersten Hydraulikdurchgang (101), der die Fluiddruckzuführvorrichtung (100) mit dem ersten Hydraulikkreis (201) verbindet;
einen zweiten Hydraulikdurchgang (102), der die Fluiddruckzuführvorrichtung (100) mit dem zweiten Hydraulikkreis (202) verbindet;
einen ersten Reservedurchgang (251), der die erste Hauptkammer (20a) mit dem ersten Hydraulikkreis (201) verbindet; und
einen zweiten Reservedurchgang (252), der die zweite Hauptkammer (20b) mit dem zweiten Hydraulikkreis (202) verbindet.

7. Elektronisches Bremssystem (1) nach Anspruch 6, ferner umfassend:
ein erstes Absperrventil (261), das an dem ersten Reservedurchgang (251) vorgesehen ist und dazu ausgelegt ist, einen Strom eines druckbeaufschlagten Fluids zu regeln; und
ein zweites Absperrventil (262), das an dem zweiten Reservedurchgang (252) vorgesehen ist und dazu ausgelegt ist, einen Strom eines druckbeaufschlagten Fluids zu regeln.

8. Verfahren zum Betreiben des elektronischen Bremssystems (1) nach Anspruch 2 oder einem der Ansprüche 3 bis 7, sofern sie von Anspruch 2 abhängen, wobei das Verfahren in einem normalen Betriebsmodus umfasst:
Öffnen des Simulatorventils (54); und
Zulassen, dass der Simulationskolben (52) durch ein von der ersten Hauptkammer (20a) abgelassenes druckbeaufschlagtes Fluid in seiner Position verändert wird, und Zuführen eines in der Simulationskammer (51) untergebrachten druckbeaufschlagten Fluids zu dem Behälter (30) entlang des Behälterdurchgangs (61), der dazu ausgelegt ist, die Hauptkammer (20a), die Simulationskammer (51) und den Behälter (30) miteinander zu verbinden.

9. Verfahren zum Betreiben des elektronischen Bremssystems (1) nach Anspruch 7, wobei das Verfahren in einem Testmodus des Prüfens einer Undichtigkeit des Hauptzylinders (20) oder der Simulationsvorrichtung (50) umfasst:
Schließen des Simulatorventils (54) und des zweiten Absperrventils (262) und Öffnen des ersten Absperrventils (261);
Versehen der ersten Hauptkammer (20a) mit einem Fluiddruck, erzeugt durch einen Betrieb der Fluiddruckzuführvorrichtung (100); und
Vergleichen eines Fluiddruckwertes des druckbeaufschlagten Fluids, dessen Erzeugung auf der Grundlage eines Betrags des Betriebs der Fluiddruckzuführvorrichtung (100) und eines Fluiddruckwerts eines druckbeaufschlagten Fluids, das der ersten Hauptkammer (20a) zugeführt wird, prognostiziert wird.

## Revendications

1. Système de frein électronique (1) comprenant :
un réservoir (30) à l'intérieur duquel un fluide est stocké ;
un maître-cylindre (20) qui inclut une chambre de maître (20a, 20b) et un piston de maître (21a, 21b) qui est configuré de telle sorte que sa position soit modifiée en fonction d'un actionnement d'une pédale de frein (10) et de telle sorte qu'il pressurise et décharge un fluide qui est logé à l'intérieur de la chambre de maître (20a, 20b) en fonction de la position modifiée du piston de maître (21a, 21b) ;
un dispositif de simulation qui inclut une chambre de simulation (51) et un piston de simulation (52) qui est configuré de telle sorte que sa position soit modifiée en fonction du fluide pressurisé qui est déchargé depuis la chambre de maître (20a) et de telle sorte qu'il pressurise et décharge un fluide qui est logé à l'intérieur de la chambre de simulation (51) en fonction de la position modifiée du piston de simulation (52) ;
une soupape de non-retour de simulateur (55) ; et
une soupape de simulateur (54) ;
**caractérisé par** un passage de réservoir (61) qui est configuré pour faire communiquer la chambre de maître (20a), la chambre de simulation (51) et le réservoir (30) les uns avec les autres ;
dans lequel la soupape de simulateur (54) est prévue sur un passage de dérivation (63) selon une connexion en parallèle à la soupape de non-retour de simulateur (55) sur le passage de réservoir (61) et selon une configuration pour commander l'écoulement d'un fluide dans des directions opposées ; et
dans lequel la soupape de non-retour de simulateur (55) est prévue sur le passage de réservoir (61) et est configurée pour permettre seulement un écoulement d'un fluide qui est dirigé depuis le réservoir (30) jusqu'à la chambre de maître (20a) et la chambre de simulation (51).

2. Système de frein électronique (1) selon la revendication 1, dans lequel le piston de maître inclut un premier piston de maître (21a) qui est pressé directement par la pédale de frein (10) et un second piston de maître (22a) qui est pressé indirectement par le premier piston de maître (21a) ;
la chambre de maître inclut une première chambre de maître (20a) à l'intérieur de laquelle le premier piston de maître (21a) est logé et une seconde chambre de maître (20b) à l'intérieur de laquelle le second piston de maître (22a) est logé ;
le piston de simulation (52) est prévu de telle sorte que sa position soit modifiée par le fluide pressurisé qui est pressurisé et déchargé depuis la première chambre de maître (20a) ; et
le passage de réservoir (61) est constitué de telle sorte qu'il fasse communiquer la première chambre de maître (20a), la chambre de simulation (51) et le réservoir (30) les uns avec les autres.

3. Système de frein électronique (1) selon l'une quelconque des revendications 1 ou 2, dans lequel le dispositif de simulation (50) inclut en outre un ressort à force de réaction (53) qui peut supporter élastiquement le piston de simulation (52).

4. Système de frein électronique (1) selon l'une quelconque des revendications 1 à 3, comprenant en outre :
une unité de commande hydraulique (200) qui est prévue entre le maître-cylindre (20) et un cylindre de roue (40) pour commander un écoulement d'une pression de fluide qui est transmise au cylindre de roue (40) ; et
un dispositif d'alimentation en pression de fluide (100) qui est configuré pour fournir à l'unité de commande hydraulique (200) une pression de fluide en fonction d'une sortie de signal électrique qui correspond à une position modifiée de la pédale de frein (10).

5. Système de frein électronique (1) selon la revendication 4, dans lequel l'unité de commande hydraulique (200) inclut un premier circuit hydraulique (201) qui est configuré pour commander une pression de fluide qui est transmise à deux cylindres de roue (40) et un second circuit hydraulique (202) qui est configuré pour commander une pression de fluide qui est transmise à deux autres cylindres de roue (40).

6. Système de frein électronique (1) selon la revendication 5, comprenant en outre :
un premier passage hydraulique (101) qui connecte le dispositif d'alimentation en pression de fluide (100) au premier circuit hydraulique (201) ;
un second passage hydraulique (102) qui connecte le dispositif d'alimentation en pression de fluide (100) au second circuit hydraulique (202) ;
un premier passage de secours (251) qui connecte la première chambre de maître (20a) au premier circuit hydraulique (201) ; et
un second passage de secours (252) qui connecte la seconde chambre de maître (20b) au second circuit hydraulique (202).

7. Système de frein électronique (1) selon la revendication 6, comprenant en outre :
une première soupape d'arrêt (261) qui est prévue sur le premier passage de secours (251) et qui est configurée pour commander un écoulement d'un fluide pressurisé ; et
une seconde soupape d'arrêt (262) qui est prévue sur le second passage de secours (252) et qui est configurée pour commander un écoulement d'un fluide pressurisé.

8. Procédé de fonctionnement du système de frein électronique (1) tel que revendiqué selon la revendication 2 ou selon l'une quelconque des revendications 3 à 7 dès lors qu'elle dépend de la revendication 2, le procédé comprenant, dans un mode de fonctionnement normal :
l'ouverture de la soupape de simulateur (54) ; et
le fait de permettre que le piston de simulation (52) ait sa position modifiée par un fluide pressurisé qui est déchargé depuis la première chambre de maître (20a) et l'alimentation d'un fluide pressurisé qui est logé à l'intérieur de la chambre de simulation (51) sur le réservoir (30) le long du passage de réservoir (61) qui est configuré pour faire communiquer la chambre de maître (20a), la chambre de simulation (51) et le réservoir (30) les uns avec les autres.

9. Procédé de fonctionnement du système de frein électronique (1) tel que revendiqué selon la revendication 7, le procédé comprenant, dans un mode de test qui consiste à contrôler une fuite du maître-cylindre (20) ou du dispositif de simulation (50) :
la fermeture de la soupape de simulateur (54) et de la seconde soupape d'arrêt (262) et l'ouverture de la première soupape d'arrêt (261) ;
l'application sur la première chambre de maître (20a) d'une pression de fluide qui est générée par un actionnement du dispositif d'alimentation en pression de fluide (100) ; et
la comparaison d'une valeur de pression de fluide d'un fluide pressurisé dont la génération est prédite sur la base d'une quantité de l'actionnement du dispositif d'alimentation en pression de fluide (100) et d'une valeur de pression de fluide d'un fluide pressurisé qui est alimenté sur la première chambre de maître (20a).
